# EUROPEAN PATENT APPLICATION

(11) **EP 4 687 127 A1**
(43) Date of publication of application: **04.02.2026**
(21) Application number: 25188486.2
(22) Date of filing: 09.07.2025
(51) Int. Cl.: G07C 9/00, B60R 25/24

(54) **VEHICLE, CONTROL METHOD, CONTROL PROGRAM, AND DIGITAL KEY SYSTEM**

(30) Priority: 31.07.2024 JP 2024125150
(71) Applicant: TOYOTA JIDOSHA KABUSHIKI KAISHA, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); HASEGAWA, Yosuke, Ohguchi-cho, 480-0195 (JP); MURASE, Junji, Ohguchi-cho, 480-0195 (JP); MORI, Yuki, Ohguchi-cho, 480-0195 (JP)
(74) Representative: J A Kemp LLP

(57) **Abstract**

A vehicle (20) is configured to communicate with multiple devices (30) that store information related to a digital key. The vehicle (20) includes a locking means. The vehicle (20) detects a locking request for the vehicle (20) via communication with a requesting device. At this time, if the requesting device is located outside the vehicle (20) (step S63: YES) and another device (30) storing information related to the digital key of the vehicle (20) is located inside the vehicle (20) (step S62: YES), the vehicle (20) checks the information of the other device (30)(step S61) and determines whether to lock the vehicle (20) based on the checked information of the other device (30) (step S64).

## Description

### CROSS-REFERENCE TO RELATED APPLICATIONS

This application is based upon and claims the benefit of priority from Japanese Patent Application No. 2024-125150, filed on July 31, 2024, the entire contents of which are incorporated herein by reference.

### BACKGROUND

### 1. Field

The present disclosure relates to a vehicle, a control method, a control program, and a digital key system.

### 2. Description of Related Art

Japanese Laid-Open Patent Publication No. 2024-1720 discloses a digital key system. The digital key system includes a vehicle and multiple devices. In the digital key system, information related to a digital key for controlling the vehicle can be stored in multiple devices, allowing the digital key to be registered to the devices.

Some digital key systems are configured to prevent the vehicle from being locked when one or more devices storing digital key information are present inside the vehicle, in order to avoid locking the key inside the vehicle. However, in a digital key system that allows a vehicle to be operated from multiple devices, it is inconvenient if the vehicle cannot be locked unless all the devices storing digital key information related to the digital key are outside the vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a first general aspect, a vehicle is configured to communicate with multiple devices storing information related to a digital key. The vehicle includes locking means. The locking means is configured to detect a locking request for the vehicle via communication with a requesting device. The requesting device is one of the multiple devices. The locking means is also configured to, upon detecting the locking request, check information of an other device storing the information related to the digital key of the vehicle if the requesting device is located outside the vehicle and the other device is located inside the vehicle. The locking means is further configured to determine whether to lock the vehicle based on the checked information of the other device.

In a second general aspect, a control method for controlling locking of a vehicle is provided. The vehicle includes locking means and is configured to communicate with multiple devices storing information related to a digital key. The method includes causing the locking means to detect a locking request for the vehicle via communication with a requesting device, the requesting device being one of the multiple devices; upon detecting the locking request, causing the locking means to check information of another device storing the information related to the digital key of the vehicle if the requesting device is located outside the vehicle and the other device is located inside the vehicle; and causing the locking means to determine whether to lock the vehicle based on the checked information of the other device.

In a third general aspect, a control program is configured to control locking of a vehicle. The vehicle includes locking means and is configured to communicate with multiple devices storing information related to a digital key. The control program is configured to cause the locking means to detect a locking request for the vehicle via communication with a requesting device. The requesting device is one of the multiple devices. The control program is also configured to cause the locking means to, upon detecting the locking request, check information of another device storing the information related to the digital key of the vehicle if the requesting device is located outside the vehicle and the other device is located inside the vehicle. The control program is further configured to cause the locking means to determine whether to lock the vehicle based on the checked information of the other device.

In a fourth general aspect, a digital key system includes multiple devices that store information related to a digital key, and the vehicle according to the first general aspect.

Other features and aspects will be apparent from the following detailed description, the drawings, and the claims.

### BRIEF DESCRIPTION OF THE DRAWINGS

Fig. 1 is a schematic diagram showing a digital key system according to an embodiment.
Fig. 2 is a schematic diagram showing owner key information in the digital key system shown in Fig. 1.
Fig. 3 is a schematic diagram showing shareable key information in the digital key system shown in Fig. 1.
Fig. 4 is a schematic diagram showing data in a database in the digital key system shown in Fig. 1.
Fig. 5 is an explanatory diagram showing a series of processes executed by the digital key system shown in Fig. 1 when an owner key is registered.
Fig. 6 is an explanatory diagram showing a series of processes executed by the digital key system shown in Fig. 1 when a friend key is registered.
Fig. 7 is an explanatory diagram showing a series of processes executed by the digital key system shown in Fig. 1 when a guest key is registered.
Fig. 8 is a schematic diagram showing a manner in which a locking request is made to a vehicle through communication with a device in the digital key system shown in Fig. 1.
Fig. 9 is a schematic diagram showing a manner in which a device moves away from the vehicle in the digital key system shown in Fig. 1.
Fig. 10 is a flowchart showing a series of processes executed by a vehicle management device to lock the vehicle in the digital key system shown in Fig. 1.
Fig. 11 is a schematic diagram showing a combination of devices located inside and outside the vehicle in a first example of the digital key system shown in Fig. 1.
Fig. 12 is a schematic diagram showing a combination of devices located inside and outside the vehicle in a second example of the digital key system shown in Fig. 1.
Fig. 13 is a schematic diagram showing a combination of devices located inside and outside the vehicle in a third example of the digital key system shown in Fig. 1.
Fig. 14 is an explanatory diagram showing a series of processes executed by the digital key system shown in Fig. 1 when a specific device is designated.
Fig. 15 is a schematic diagram showing a manner in which the vehicle management device starts the engine in the digital key system shown in Fig. 1.
Fig. 16 is a flowchart showing a series of processes executed by the vehicle management device when starting the engine in the digital key system shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

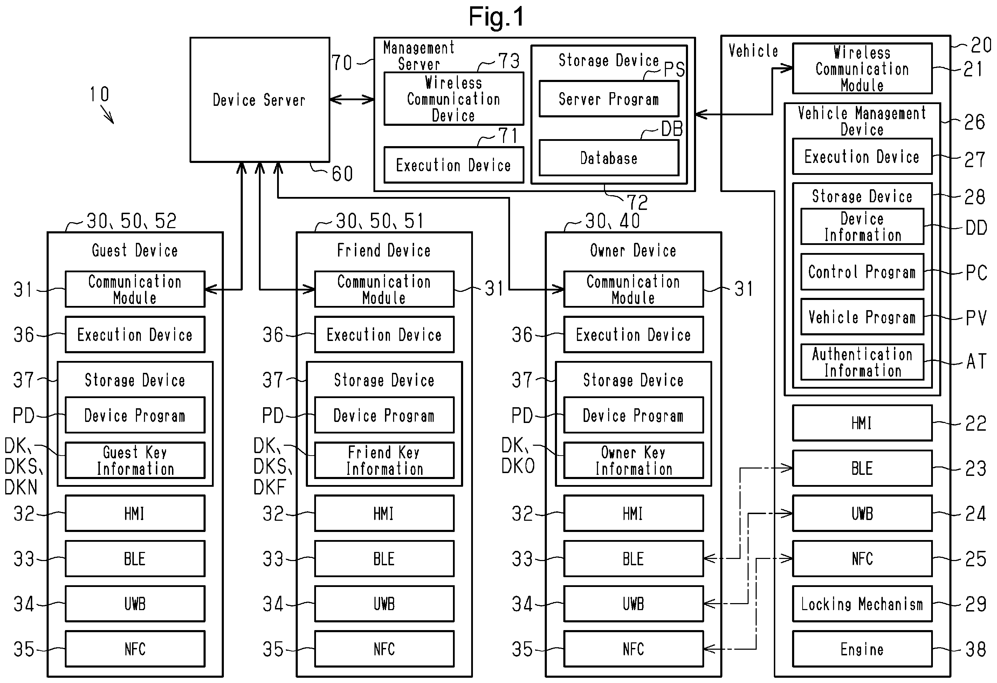

A digital key system 10 according to an embodiment will now be described with reference to Figs. 1 to 16.

### Overview of the Digital Key System 10

As shown in Fig. 1, the digital key system 10 manages multiple digital keys available for a vehicle 20. Standards for digital keys have been established by the Car Connectivity Consortium (CCC). The digital key functionality in the present embodiment conforms to the standards established by the Car Connectivity Consortium (CCC). The digital key system 10 includes the vehicle 20, multiple devices 30, a device server 60, and a management server 70.

The vehicle 20 includes, as communication modules, a wireless communication device 21, a Human Machine Interface (HMI) 22, a Bluetooth Low Energy (BLE) module 23, one or more Ultra Wideband (UWB) modules 24, and a Near Field Communication (NFC) module 25. The vehicle 20 includes a vehicle management device 26, a locking mechanism 29, and an engine 38.

The wireless communication device 21 communicates with the management server 70 via a wireless communication network. The HMI 22 includes an input device, which undergoes input operations performed by the user of the vehicle 20, and an output device, which presents information to the user. The output device is, for example, a monitor and a speaker.

The BLE module 23 performs short-range wireless communication with the devices 30 via BLE communication. The one or more UWB modules 24 communicate with the devices 30 via UWB communication, which is communication using UWB. The one or more UWB modules 24 measure the distances between the devices 30 and the vehicle 20. The NFC module 25 performs short-range wireless communication with the devices 30 via NFC communication.

The locking mechanism 29 is a mechanism that locks and unlocks the vehicle 20. For example, the locking mechanism 29 is installed in the doors, the trunk, and the back door of the vehicle 20.

The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27, which is processing circuitry, and a storage device 28.

The storage device 28 stores a vehicle program PV, authentication information AT, a control program PC, and device information DD.

The vehicle program PV is executed by the execution device 27 to cause the execution device 27 to store and delete the authentication information AT. The authentication information AT is information for authenticating a digital key so that the vehicle 20 can be controlled using the digital key when the digital key is used. The authentication information AT is provided for each digital key to be authenticated. The execution device 27 is a CPU. The execution device 27 executes the vehicle program PV to execute processes related to storage and deletion of the authentication information AT. The authentication information AT is information related to digital keys.

When the vehicle management device 26 authenticates the digital key, the vehicle management device 26 enables control of the vehicle 20 using the authenticated digital key. For example, upon authentication of the digital key, the vehicle management device 26 enables unlocking of the vehicle 20. In another example, upon authentication of the digital key, the vehicle management device 26 enables starting of the vehicle 20.

The vehicle management device 26 controls the locking mechanism 29 in response to the digital key to allow for locking and unlocking of the vehicle 20 with the digital key. The vehicle management device 26 is locking means or a locking device. The vehicle management device 26 allows for control of the engine 38 with the digital key by controlling the engine 38 in response to the digital key.

The control program PC is executed by the execution device 27 to cause the execution device 27 to control the locking mechanism 29. The control program PC is executed by the execution device 27 to cause the execution device 27 to control the engine 38. A manner in which the vehicle management device 26 controls the locking mechanism 29 and the engine 38 will be discussed below.

The device information DD is information indicating a specific device 30 among the devices 30. The device information DD will be discussed below.

The devices 30 are portable information terminals such as smartphones. Each device 30 includes a wireless communication device 31, an HMI 32, a BLE module 33, a UWB module 34, an NFC module 35, an execution device 36, which is processing circuitry, and a storage device 37.

The wireless communication device 31 communicates with the device server 60 via a wireless communication line. The HMI 32 includes an input device, which undergoes input operations performed by the user of the device 30, and an output device, which presents information to the user. The output device is, for example, a monitor and a speaker.

The BLE module 33 performs short-range wireless communication with the vehicle 20 via BLE communication. The UWB module 34 communicates with the vehicle 20 via UWB communication, which is communication using UWB. The NFC module 35 performs short-range wireless communication with the vehicles 20 via NFC communication.

The storage device 37 stores a device program PD and key information DK. The device program PD is executed by the execution device 36 to cause the execution device 36 to store and delete the key information DK. The key information DK is information indicating digital keys.

The device program PD includes, for example, a device application and a digital key framework. The device application is an application for storing and deleting the key information DK. The digital key framework is a program that provides functions of pairing of the devices 30 and sharing of digital keys by using an API prepared in the OS. The execution device 36 executes the device program PD to execute processes related to storage and deletion of the key information DK. The key information DK is information related to the digital key.

The multiple devices 30 include an owner device 40 and shareable devices 50. The owner device 40 stores owner key information DKO indicating the owner key KO as the key information DK. Only one owner key KO is allowed to be registered to a single vehicle 20. Therefore, there is only one owner key KO for each vehicle 20. The owner device 40 belongs to the owner of a vehicle 20.

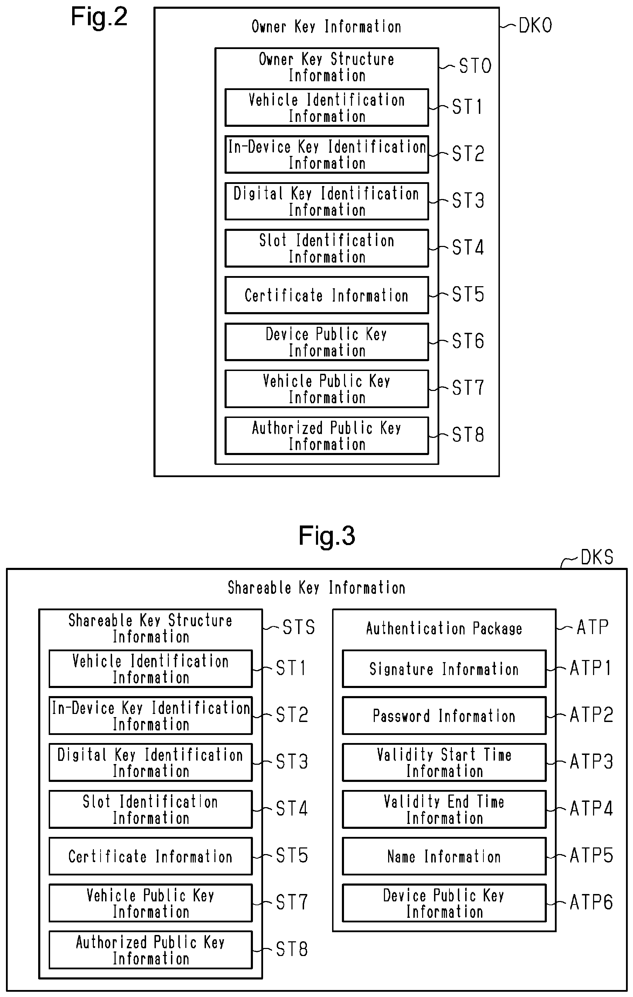

As shown in Fig. 2, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is information used to identify the vehicle 20 for which digital keys are assigned. For example, the vehicle identification information ST1 is the ID of a vehicle 20.

The in-device key identification information ST2 is used for management of digital keys in the device 30. The in-device key identification information ST2 is information used to identify digital keys in the application of the device 30.

The digital key identification information ST3 is used for management of digital keys in the management server 70. The slot identification information ST4 is information used to identify digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates an in-vehicle public key PKV, which is a public key of the vehicle 20. The authorized public key information ST8 indicates the vehicle public key PKV that has been permitted.

As shown in Fig. 1, the shareable devices 50 each store shareable key information DKS indicating a shareable key KS as the key information DK. The shareable devices 50 are devices 30 that are separate from the owner device 40. Multiple shareable keys KS can be registered to one vehicle 20 when digital keys are registered so as to be usable. That is, multiple shareable keys KS may be associated with a single vehicle 20.

The shareable devices 50 include friend devices 51 and guest devices 52. The friend device 51 stores friend key information DKF indicating a friend key KF as the shareable key information DKS. The guest device 52 stores guest key information DKN indicating a guest key KN as the shareable key information DKS. That is, the types of the shareable keys KS include the friend key KF and the guest key KN. The friend key KF is a shareable key KS that has been registered based on a direct registration request D21 from the owner device 40, as described later. The guest key KN is a shareable key KS that has been registered based on a registration request D31 from a friend device 51, as described later. In other words, the guest key KN is a shareable key KS that has been registered based on a registration request D31 from another device 30, rather than a direct registration request D21 from the owner device 40. The guest key KN refers to a shareable key KS that is not a friend key KF among the shareable keys KS.

A state in which the digital key is registered refers to a state in which the digital key is available for use. In a state in which the digital key is registered, the vehicle 20 stores the authentication information AT, and the devices 30 store the key information DK. The authentication information AT is information related to digital keys. In a state in which a digital key is registered, the vehicle 20 stores information related to the digital key. The key information DK is information related to the digital key. In a state in which a digital key is registered, the device 30 stores information related to the digital key.

As shown in Fig. 3, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. In other words, the shareable key structure information STS is information obtained by removing the device public key information ST6 from the owner key structure information STO.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving the digital key. For example, in the case of the friend device 51, the signature information ATP1 indicates a signature by the owner device 40. The owner signature information indicates that the owner device 40 has signed the device public key PKD of the friend device 51 indicated by the device public key information ATP6. Further, for example, in the case of the guest device 52, the signature information ATP1 indicates a signature by the friend device 51. The friend signature information indicates that the friend device 51 has signed the device public key PKD of the guest device 52 indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable key KS. The name information ATP5 is set to an identifiable name for each of the shareable devices 50, for example, by an operation from the owner device 40.

As shown in Fig. 1, the device server 60 relays communication between the devices 30 and the management server 70. Fig. 1 shows only one device server 60. However, a separate device server 60 may be provided for each type of device 30. That is, the device server 60 used for communication with a first type of device 30 may differ from the device server 60 used for communication with a second type of device 30. For example, the type may refer to the model of the device 30, and a separate device server 60 may be provided for each model of the device 30. In another example, the type may refer to the communication line used by the device 30, and a separate device server 60 may be provided for each type of communication line.

Each of the device servers 60 relays communication between the corresponding device 30 and the management server 70. The devices 30 of different types are each capable of communicating with the management server 70 via the corresponding device server 60.

### Management Server 70

The management server 70 is configured to manage registration of digital keys. The management server 70 is capable of communicating with the vehicle 20 and multiple devices 30. The management server 70 includes an execution device 71, which is processing circuitry, a storage device 72, and a wireless communication device 73. The wireless communication device 73 communicates with the device server 60 via a wireless communication line. Further, the wireless communication device 73 is capable of wirelessly communicating with the wireless communication device 21 of the vehicle 20.

The storage device 72 stores a server program PS and a database DB. The server program PS is executed by the execution device 71 to cause the execution device 71 to register digital keys to the database DB and delete digital keys from the database DB.

The database DB includes information in which, for each of the digital keys, the corresponding vehicle 20 is associated with the stered devices 30. The data DA included in the database DB is partitioned by vehicle 20. In a state in which digital keys are registered, the management server 70 stores, as the data DA, information indicating devices 30 to which key information DK indicating the digital keys. The management server 70 manages digital keys by storing the data DA in the database DB.

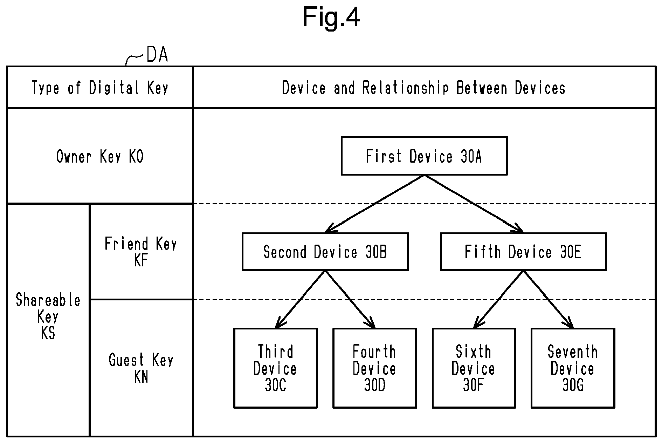

As shown in Fig. 4, the data DA of one vehicle 20 includes information related to the types of digital keys registered to the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

Authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, as the hierarchical level of a digital key increases, the scope of control permitted over the vehicle 20 also increases. The control scope over the vehicle 20 refers to the set of controllable functions, such as start control of the engine 38 of the vehicle 20, power-on control of the vehicle 20, and door unlocking and locking control of the vehicle 20. For example, when the control scope includes all three of the above functions, the control scope is broader than when it includes only door unlocking and locking control of the vehicle 20. Specifically, the control scope of the vehicle 20 permitted by the friend key KF includes all three functions described above, whereas the control scope permitted by the temporary key KN is limited to only the door unlocking and locking control of the vehicle 20.

A state will now be described in which digital keys are registered to seven devices 30 for one vehicle 20. The seven devices 30 are first through seventh devices 30A to 30G. The digital keys respectively registered to the first device 30A to the seventh device 30G are a first key through a seventh key.

The device 30 to which the owner key KO is registered as a digital key is the first device 30A. In other words, the first device 30A is the owner device 40. Accordingly, the first digital key is the owner key KO.

The devices 30 to which the shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. In other words, the second key through the seventh key are all shareable keys KS.

Specifically, the devices 30 to which the friend key KF is registered as the shareable key KS are the second device 30B and the fifth device 30E. In other words, the second device 30B and the fifth device 30E are the friend devices 51. The devices 30 to which the guest key KN is registered as the shareable key KS are the third device 30C, the fourth device 30D, the sixth device 30F, and the seventh device 30G. In other words, the fourth device 30D, the fifth device 30E, the sixth device 30F, and the seventh device 30G are the guest devices 52.

The relationship between the registered devices 30 included in the data DA will now be described. The relationship between the second device 30B and the first device 30A is such that the friend key KF has been registered to the second device 30B in response to a registration request from the first device 30A. In other words, the second digital key is registered based on the first digital key.

The relationship between the fifth device 30E and the first device 30A is such that the friend key KF has been registered to the fifth device 30E in response to a registration request from the first device 30A. In other words, the fifth digital key is registered based on the first digital key.

The relationship between the third device 30C and the second device 30B is such that the guest key KN has been registered to the third device 30C in response to a registration request from the second device 30B. In other words, the third digital key is registered based on the second digital key.

The relationship between the fourth device 30D and the second device 30B is such that the guest key KN has been registered to the fourth device 30D in response to the registration request from the second device 30B. In other words, the fourth digital key is registered based on the second digital key.

The relationship between the sixth device 30F and the fifth device 30E is such that the guest key KN has been registered to the sixth device 30F in response to a registration request from the fifth device 30E. In other words, the sixth digital key is registered based on the fifth digital key.

The relationship between the seventh device 30G and the fifth device 30E is such that the guest key KN has been registered to the seventh device 30G in response to a registration request from the fifth device 30E. In other words, the seventh digital key is registered based on the fifth digital key.

As described above, the data DA includes information related to the devices 30 to which the digital keys have been registered. In the data DA, each registered device 30 is associated with information indicating another device 30 that initiated the registration. The data DA also includes information indicating the digital key on which the registration of each digital key is based.

### Registration of Digital Keys

Next, a series of processes for registering digital keys to the digital key system 10 will be described. The registration of digital keys includes the registration of the owner key KO, the registration of the friend key KF, and the registration of the guest key KN. The following description explains the overall process from a state in which no digital key is registered to a state in which digital keys are registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Registration of the Owner Key KO

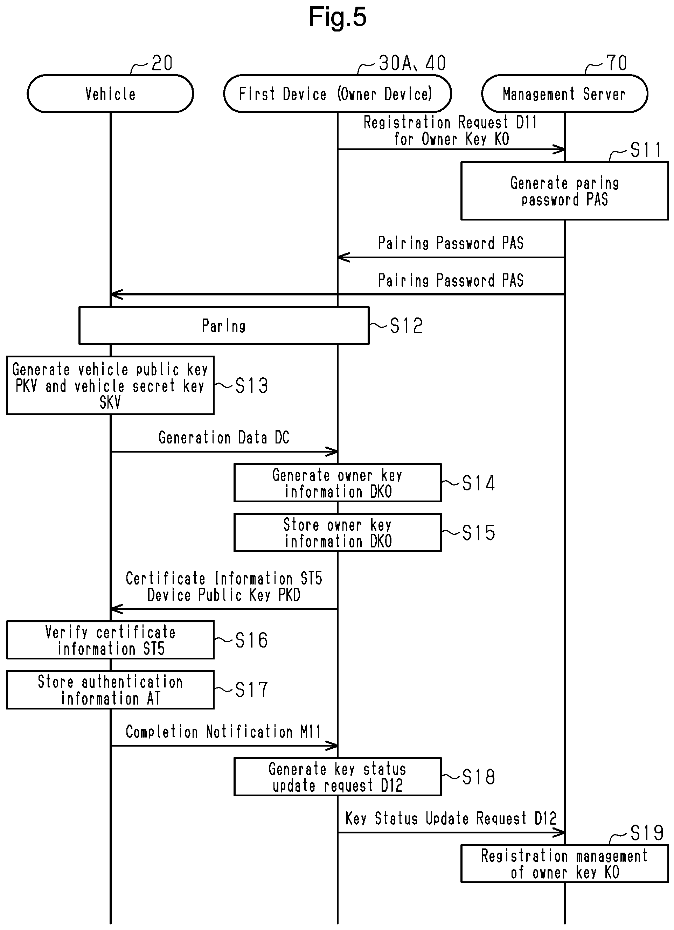

As shown in Fig. 5, the digital key system 10 executes a series of processes in order to register the owner key KO. The following describes an example of registering the owner key KO to the first device 30A, which does not store the key information DK that indicates the owner key KO.

The digital key system 10 stores the key information DK indicating the owner key KO in the first device 30A through the registration of the owner key KO. The digital key system 10 causes the vehicle 20 to store the authentication information AT for authenticating the owner key KO through the registration of the owner key KO. Thus, the first device 30A is configured as the owner device 40. Prior to the registration of the owner key KO, an application required for the registration is pre-installed on the first device 30A.

Upon receiving a registration request D11 for the owner key KO from the first device 30A or the like, the management server 70 executes the process of step S11. In step S11, the management server 70 generates a pairing password PAS. The management server 70 then transmits information indicating the pairing password PAS to the vehicle 20 and the first device 30A.

Thereafter, the vehicle 20 receives the pairing password PAS. After receiving the pairing password PAS, the vehicle 20 is set to a pairing mode via the HMI 22. The vehicle 20 then stands by in a state in which the vehicle 20 can receive the password from the first device 30A. The vehicle 20 then advances the process to step S12.

In step S12, the vehicle 20 performs pairing with the first device 30A. When the pairing is performed, the vehicle 20 establishes a secure channel for data transmission with the first device 30A. The pairing is performed using the pairing password PAS transmitted from the management server 70 to the vehicle 20 and the first device 30A. When the pairing is completed, the vehicle 20 advances the process to step S13.

In step S13, the vehicle 20 generates a vehicle public key PKV, which is a public key of the vehicle 20, and a vehicle secret key SKV, which is a secret key of the vehicle 20. Thereafter, the vehicle 20 transmits generation data DC for generating the owner key KO to the first device 30A via the secure channel. The generation data DC includes the vehicle identification information ST1 and the vehicle public key information indicating the vehicle public key PKV. Then, the first device 30A receives the generation data DC. Thereafter, the first device 30A advances the process to step S14.

In step S14, the first device 30A generates owner key information DKO indicating the owner key KO. Thereafter, the first device 30A advances the process to step S15.

In step S15, the first device 30A stores the owner key information DKO. As a result, the first device 30A is configured as the owner device 40. Subsequently, the first device 30A transmits, to the vehicle 20, the certificate information ST5 related to the owner key KO and the device public key information ST6 indicating the device public key PKD.

Thereafter, upon receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 advances the process to step S17.

In step S17, the vehicle 20 stores the device public key information ST6 indicating the device public key PKD as the authentication information AT. Subsequently, the vehicle 20 transmits a completion notification M11 to the first device 30A, indicating that the storage of the authentication data AT has been completed.

Thereafter, upon receiving the completion notification M11, the first device 30A executes the process of step S18. In step S18, the first device 30A generates a key status update request D12 for the owner key KO. The key status update request D12 is a signal for requesting the management server 70 to update the database DB. The first device 30A then transmits the key status update request D12 for the owner key KO to the management server 70 via the device server 60.

Thereafter, upon receiving the key status update request D12, the management server 70 executes the process of step S19. In step S19, the management server 70 performs registration management of the owner key KO. Specifically, the management server 70 stores the fact that the device 30 to which the owner key KO is registered is the first device 30A as the data DA of the vehicle 20 in the database DB. The digital key system 10 then terminates the series of processes for registering the owner key KO.

### Registration of the Friend Key KF

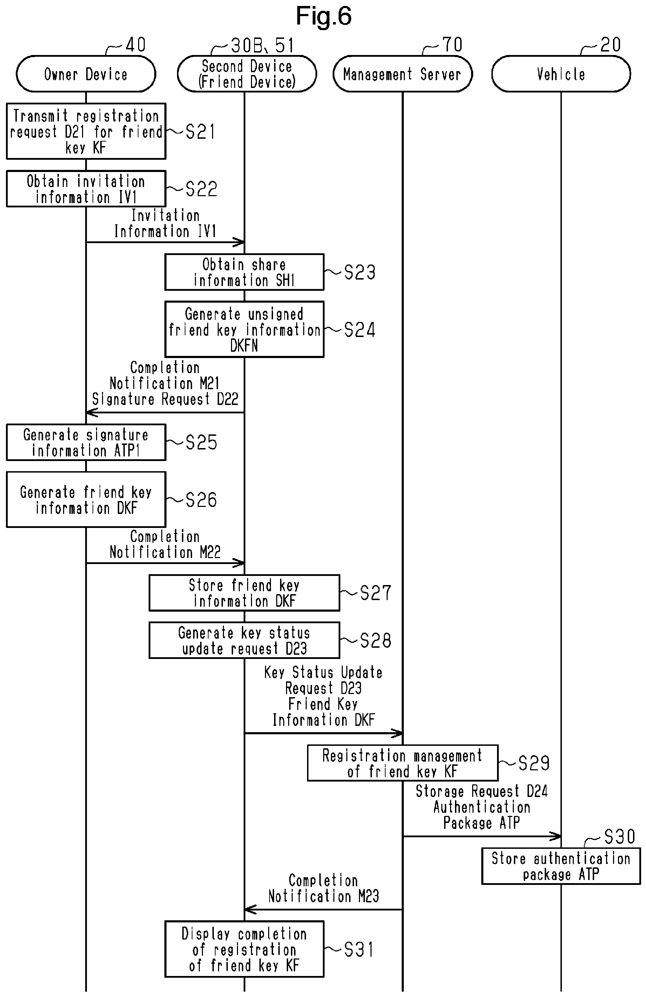

As shown in Fig. 6, the digital key system 10 executes a series of processes in order to register the friend key KF. The following describes an example of registering the friend key KF to the second device 30B, which does not store the friend key information DKF, through this series of processes.

When an operation for requesting the registration of the friend key KF is performed in the owner device 40, the owner device 40 first executes the process of step S21. In step S21, the owner device 40 transmits a registration request D21 for the friend key KF to a relay server (not shown). Thereafter, the owner device 40 advances the process to step S22.

In step S22, the owner device 40 obtains invitation information IV1 for sharing a digital key from the relay server. The invitation information IV1 is, for example, a URL link. The URL link contains share information SH1 necessary to share the digital key. Thereafter, the owner device 40 transmits the invitation information IV1 to the second device 30B.

Thereafter, upon receiving the invitation information IV1, the second device 30B executes the process of step S23. In step S23, the second device 30B obtains the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Thereafter, the second device 30B advances the process to step S24.

In step S24, the second device 30B generates unsigned friend key information DKFN by using the share information SH1. The unsigned friend key information DKFN is friend key information DKF that does not have the signature information ATP1. The unsigned friend key information DKFN includes the obtained share information SH1. Thereafter, the second device 30B transmits a completion notification M21 to the owner device 40, indicating that the upload of the generated unsigned friend key information DKFN to the URL link has been completed. The second device 30B also transmits a signature request D22 to the owner device 40.

Subsequently, the owner device 40 receives the completion notification M21 and the signature request D22 from the second device 30B. Upon receiving the completion notification M21, the owner device 40 obtains the unsigned friend key information DKFN. When the owner device 40 receives the signature request D22, the owner device 40 is operated to execute the process of step S25.

In step S25, the owner device 40 generates the signature information ATP1. Specifically, the owner device 40 causes the HMI 32 to present the unsigned friend key information DKFN that has been obtained, and accepts an operation indicating that the user of the owner device 40 has agreed to the registration of the friend key KF. Upon receiving the operation, the owner device 40 generates the signature information ATP1 based on the operation. The owner device 40 then advances the process to step S26.

In step S26, the owner device 40 adds the signature information ATP1 to the unsigned friend key information DKFN. The owner device 40 thus generates the friend key information DKF. Thereafter, the owner device 40 uploads the generated friend key information DKF to the URL link, which is the invitation information IV1. Then, the owner device 40 transmits, to the second device 30B, a completion notification M22 indicating that uploading of the completed friend key information DKF to the URL link has been completed.

Thereafter, the second device 30B receives the completion notification M22. Then, the second device 30B executes the process of step S27. In step S27, the second device 30B stores the friend key information DKF by downloading it. Thus, the second device 30B is configured as the friend device 51. Thereafter, the second device 30B advances the process to step S28.

In step S28, the second device 30B generates a key status update request D23 for the friend key KF. The second device 30B then transmits, to the management server 70, the friend key information DKF and the key status update request D23 for the friend key KF.

Thereafter, upon receiving the key status update request D23 for the friend key KF, the management server 70 executes the process of step S29. In step S29, the management server 70 performs registration management of the friend key KF.

Specifically, the management server 70 verifies that the friend key KF, which is the subject of the key status update request D23, is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D23.

On the other hand, when the friend key KF for which the key status update request D23 has been received is not listed in the revocation list, the management server 70 registers the friend key KF for which the key status update request D23 has been received to the database DB. Specifically, the management server 70 stores the fact that the device 30 registered as the friend device 51 is the second device 30B in the data DA of the vehicles 20 in the database DB. The management server 70 stores the relationship between the second device 30B and the owner device 40 by referencing the obtained friend key information DKF.

Subsequently, the management server 70 transmits, to the vehicle 20, the authentication package ATP, which is part of the friend key information DKF, along with a storage request D24, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Thereafter, upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Thereafter, upon receiving the completion notification M23 of the key status update, the second device 30B executes the process of step S31. In the process of step S31, the second device 30B presents information indicating the completion of the registration of the friend key KF on the HMI 32. For example, the second device 30B displays an image indicating the completion of the registration of the friend key KF on the HMI 32. As a result, the digital key system 10 terminates the series of processes for registering the friend key KF.

### Registration of the Guest Key KN

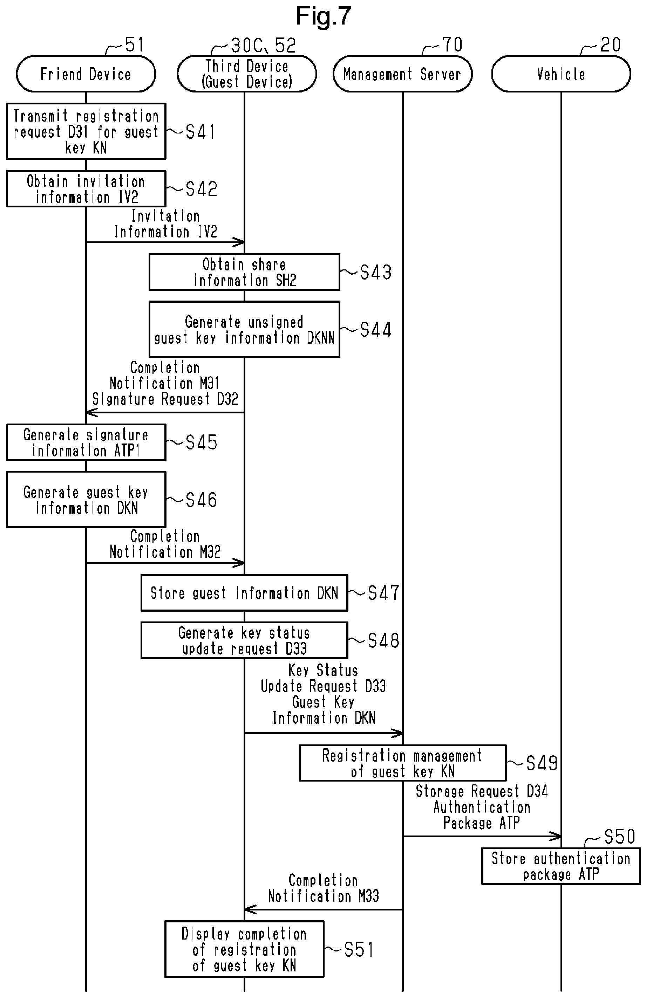

As shown in Fig. 7, the digital key system 10 executes a series of processes in order to register the guest key KN. The following describes an example of registering the guest key KF to the third device 30C, which does not store the guest key information DKN, through this series of processes.

When an operation for requesting the registration of the guest key KN is performed in the friend device 51, the friend device 51 first executes the process of step S41. In step S41, the friend device 51 transmits a registration request D31 for the guest key KN to the relay server (not shown). Thereafter, the friend device 51 advances the process to step S42.

In step S42, the friend device 51 obtains invitation information IV2 for sharing a digital key from the relay server. The invitation information IV2 is, for example, a URL link. The URL link contains share information SH2 necessary to share the digital key. Thereafter, the friend device 51 transmits the invitation information IV2 to the third device 30C.

Thereafter, upon receiving the invitation information IV2, the third device 30C executes the process of step S43. In step S43, the third device 30C obtains the share information SH2 based on the invitation information IV2. Specifically, the third device 30C downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S44.

In step S44, the third device 30C generates unsigned guest key information DKNN using the share information SH2. The unsigned guest key information DKNN is guest key information DKN that does not have the signature information ATP1. The unsigned guest key information DKNN includes the obtained share information SH2. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

Subsequently, the friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 is operated to execute the process of step S45.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 generates the signature information ATP1 based on the operation. Thereafter, the friend device 51 advances the process to step S46.

In step S46, the friend device 51 adds the signature information ATP1 to the unsigned guest key information DKNN. The friend device 51 thus generates the guest key information DKN. Thereafter, the friend device 51 uploads the generated guest key information DKN to the URL link, which is the invitation information IV2. Then, the friend device 51 transmits, to the third device 30C, a completion notification M32 indicating that uploading of the completed guest key information DKN to the URL link has been completed.

Thereafter, the third device 30C receives the completion notification M32. Then, the third device 30C executes the process of step S47. In step S47, the third device 30C downloads and stores the guest key information DKN. As a result, the third device 30C is configured as the guest device 52. Thereafter, the third device 30C advances the process to step S48.

In step S48, the third device 30C generates a key status update request D33 for the guest key KN. The third device 30C transmits the guest key information DKN and the key status update request D33 for the guest key KN to the management server 70.

Thereafter, upon receiving the key status update request D33 for the guest key KN, the management server 70 executes the process of step S49. In step S49, the management server 70 performs registration management of the guest key KN.

Specifically, the management server 70 verifies that the guest key KN, which is the subject of the key status update request D33, is not listed in the revocation list. If the guest key KN is listed in the revocation list, the management server 70 transmits a notification to the third device 30C indicating that it cannot respond to the key status update request D33.

On the other hand, in a case in which the guest key KN is not listed in the revocation list, the management server 70 registers the guest key KN, which is the subject of the key status update request D33, to the database DB. Specifically, the management server 70 stores the fact that the device 30 registered as the guest device 52 is the third device 30C in the data DA of the vehicles 20 in the database DB. The management server 70 stores the relationship between the third device 30C and the friend device 51 by referencing the obtained guest key information DKN. Specifically, the management server 70 stores the fact that the third device 30C is the device 30 having the guest key KN registered in response to the registration request D31 from the friend device 51.

Subsequently, the management server 70 transmits, to the vehicle 20, the authentication package ATP, which is part of the guest key information DKN, along with a storage request D34, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Thereafter, upon receiving the authentication package ATP and the storage request D34, the vehicle 20 executes the process of step S50. In step S50, the vehicle 20 stores the received authentication package ATP. The authentication package ATP is the authentication information AT for authenticating the guest key KN.

After completing the registration management, the management server 70 transmits a completion notification M33 of the key status update to the third device 30C.

Thereafter, upon receiving the completion notification M33 of the key status update, the third device 30C executes the process of step S51. In the process of step S51, the third device 30C presents information indicating completion of the registration of the guest key KN on the HMI 32. For example, the third device 30C displays an image indicating the completion of the registration of the guest key KN on the HMI 32. As a result, the digital key system 10 terminates the series of processes for registering the guest key KN.

### Manner in Which the Vehicle 20 is Locked

When the digital keys are registered in the manner shown in Figs. 5 to 7, the registered digital keys can be used to control the vehicle 20.

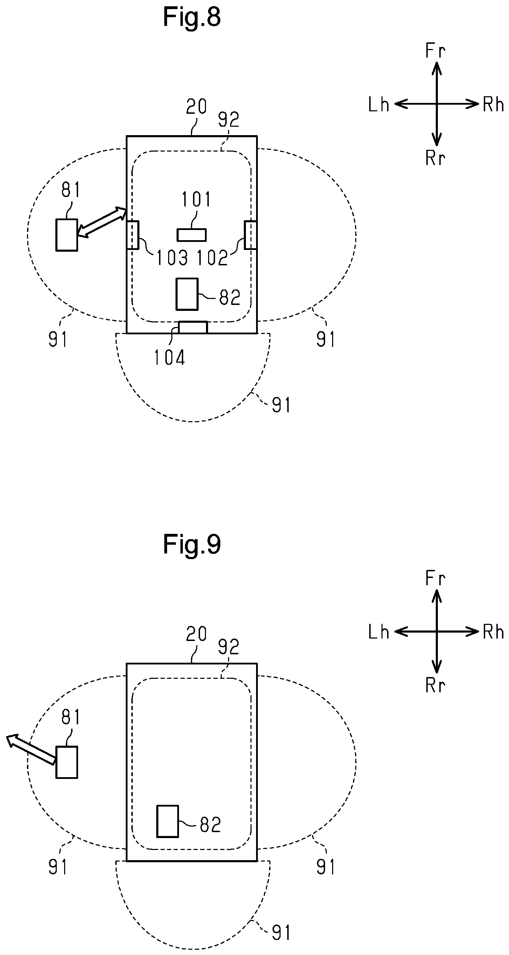

The registered digital keys can be used to lock the vehicle 20. Hereinafter, a manner in which digital keys lock the vehicle 20 will be described with reference to Figs. 8 to 14.

Some of the drawings, beginning at Fig. 8, include arrows. In the drawings including arrows, Fr indicates the front direction of the vehicle 20. In the drawings including arrows, Rr indicates the rear direction of the vehicle 20. In drawings including arrows, Rh indicates the right side as viewed from an occupant facing forward in the vehicle 20. In drawings including arrows, Lh indicates the left side as viewed from an occupant facing forward in the vehicle 20.

In the following description, terms related to orientations or directions, such as front, rear, right, and left, are defined based on the vehicle 20.

Effective Range of UWB Communication Between the Vehicle 20 and the Devices 30

The vehicle management device 26 detects a locking request via communication with a device 30. When detecting a locking request, the vehicle management device 26 locks the vehicle 20 in response to the locking request. Fig. 8 shows a manner in which the user of the device 30 requests locking of the vehicle 20 via communication between the vehicle 20 and a device 30. The devices 30 in Fig. 8 each store information related to a digital key. In other words, a digital key is registered to each device 30.

Fig. 8 shows exterior UWB effective ranges 91 and an interior UWB effective range 92. As described above, the vehicle 20 performs UWB communication with the devices 30 through one or more UWB modules 24. The vehicle 20 includes a first UWB module 101, a second UWB module 102, a third UWB module 103, and a fourth UWB module 104 as the one or more UWB modules 24.

The exterior UWB effective ranges 91 are ranges outside the vehicle 20 within which a device 30 can perform UWB communication with the vehicle 20. In the exterior UWB effective range 91 on the right side of the vehicle 20 in Fig. 8, the vehicle 20 performs UWB communication with devices 30 through the second UWB module 102. In the exterior UWB effective range 91 on the left side of the vehicle 20 in Fig. 8, the vehicle 20 performs UWB communication with devices 30 through the third UWB module 103. In the exterior UWB effective range 91 behind the vehicle 20 in Fig. 8, the vehicle 20 performs UWB communication with devices 30 through the fourth UWB module 104.

The interior UWB effective range 92 is a range inside the vehicle 20 within which devices 30 can perform UWB communication with the vehicle 20. In the interior UWB effective range 92, the vehicle 20 performs UWB communication with devices 30 through the first UWB module 101.

The vehicle 20 performs distance measurement through UWB communication with a device 30. When a device 30 is present inside the vehicle 20, the vehicle 20 performs distance measurement based on the signal strength of UWB communication with the device 30 through the first UWB module 101. When a device 30 is at the right side of the vehicle 20, the vehicle 20 performs distance measurement based on the signal strength of UWB communication with the device 30 through the second UWB module 102. When a device 30 is at the left side of the vehicle 20, the vehicle 20 performs distance measurement based on the signal strength of UWB communication with the device 30 through the third UWB module 103. When a device 30 is behind the vehicle 20, the vehicle 20 performs distance measurement based on the signal strength of UWB communication with the device 30 through the fourth UWB module 104.

The vehicle 20 determines that a device 30 is present inside the vehicle 20 when performing UWB communication with the device 30 within the interior UWB effective range 92. In other words, the vehicle 20 determines that a device 30 is present inside the vehicle 20 when performing UWB communication with the device 30 through the first UWB module 101.

The vehicle 20 determines that a device 30 is present outside the vehicle 20 when performing UWB communication with the device 30 within any of the exterior UWB effective ranges 91. In other words, the vehicle 20 determines that the device 30 is present outside the vehicle 20 when performing UWB communication with the device 30 through the second UWB module 102, the third UWB module 103, or the fourth UWB module 104.

### Manner in Which the Vehicle 20 is Locked Based on a Locking Request

Fig. 8 shows an external device 81 and an internal device 82, which are devices 30 storing information related to digital keys. The external device 81 is a device 30 that is located outside the vehicle 20 when the vehicle management device 26 attempts to lock the vehicle 20. The internal device 82 is a device 30 located inside the vehicle 20 when the vehicle management device 26 attempts to lock the vehicle 20.

The user of a device 30 can issue a locking request to the vehicle 20 by operating the device 30 to transmit a signal for requesting locking from the device 30 to the vehicle 20. The device 30 transmits a signal for requesting locking via BLE communication using the BLE module 33.

The vehicle management device 26 detects a locking request for the vehicle 20 by receiving the signal for requesting locking. Thereafter, the vehicle management device 26 determines whether a device 30 storing information related to a digital key is present inside the vehicle 20. At this time, the vehicle management device 26 determines the presence or absence of a device 30 inside the vehicle 20 via UWB communication with the device 30.

The vehicle management device 26 locks the vehicle 20 by controlling the locking mechanism 29 when verifying that no device 30 storing information related to a digital key is present inside the vehicle 20. For example, in Fig. 8, even if the external device 81 transmits a signal for requesting locking, the vehicle management device 26 does not lock the vehicle 20 when the presence of the internal device 82 is verified via UWB communication. In this manner, the vehicle management device 26 prevents a device 30 storing information related to a digital key from being locked inside in the vehicle 20.

The user can also issue a locking request for the vehicle 20 by performing an operation on the vehicle 20 to requesting locking, while carrying a device 30 storing information related to a digital key. For example, the user can issue a locking request for the vehicle 20 by touching the door handle of the vehicle 20 while carrying a device 30 storing information related to a digital key.

When an operation is performed on the vehicle 20 to request locking, the vehicle management device 26 first performs UWB communication with the device 30. When the vehicle management device 26 verifies that the device 30 storing information related to a digital key is within one of the exterior UWB effective ranges 91 via UWB communication, the vehicle management device 26 detects the locking request for the vehicle 20. The vehicle management device 26 may detect the locking request for the vehicle 20 when verifying that the device 30 storing information related to a digital key is within one of the exterior UWB effective ranges 91 and within a specified distance from the vehicle 20 through the distance measurement by UWB communication.

Thereafter, the vehicle management device 26 determines whether a device 30 storing information related to a digital key is present inside the vehicle 20 in the same manner as in the case in which the vehicle management device 26 received the signal for requesting locking. For example, in Fig. 8, even if the user carrying the external device 81 performs an operation on the vehicle 20 to request locking, the vehicle management device 26 does not lock the vehicle 20 when verifying the presence of the internal device 82 through UWB communication.

### Manner in Which the Vehicle 20 is Locked Based on Distance Measurement

The vehicle management device 26 locks the vehicle 20 when detecting that the device 30 storing the information related to the digital key is separated from the vehicle 20 by at least a specified distance by distance measurement via UWB communication with the device 30. At this time as well, the vehicle management device 26 determines whether locking of the vehicle 20 is permissible. Fig. 9 shows a state in which the external device 81 moves away from the vehicle 20.

In the determination of whether locking of the vehicle 20 is permissible, the vehicle management device 26 determines whether a device 30 storing information related to a digital key is present inside the vehicle 20, similarly to the case in which the vehicle management device 26 detects a locking request for the vehicle 20. For example, even when the user of the external device 81 moves in a direction indicated by the outlined arrow in Fig. 9 to be separated from the vehicle 20 by at least a specified distance, the vehicle management device 26 does not lock the vehicle 20 when verifying the presence of the internal device 82 via UWB communication.

As described with reference to Figs. 8 and 9, the vehicle management device 26 locks the vehicle 20 when verifying that no device 30 storing information related to a digital key is present inside the vehicle 20. However, the user may desire to lock the vehicle 20 even when a device 30 storing information related to a digital key is present inside the vehicle 20. The vehicle management device 26 locks the vehicle 20 even when a device 30 storing information related to digital key is present inside the vehicle 20, provided that certain conditions are met.

### Series of Processes Executed when the Vehicle 20 is Locked

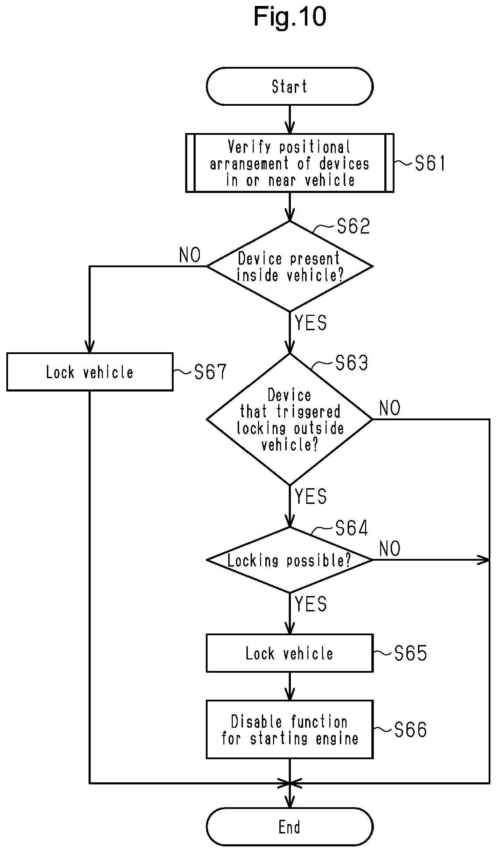

Fig. 10 shows a series of processes executed by the vehicle management device 26 when locking the vehicle 20. The series of processes shown in Fig. 10 is executed by the execution device 27 based on the control program PC.

The vehicle management device 26 executes the series of processes shown in Fig. 10 when locking the vehicle 20. As described with reference to Fig. 8, the vehicle management device 26 executes the series of processes shown in Fig. 10 when detecting a locking request for the vehicle 20. As described with reference to Fig. 9, the vehicle management device 26 executes the series of processes shown in Fig. 10 when detecting that a device 30 is separated from the vehicle 20 by at least the specified distance.

### Series of Processes Executed in Response to a Locking Request

The following describes a manner in which the vehicle management device 26 executes the series of processes shown in Fig. 10 when detecting a locking request for the vehicle 20 in the manner shown in Fig. 8.

In the process of step S61, the vehicle management device 26 verifies the positional arrangement of devices 30 in or near the vehicle 20. At this time, the vehicle management device 26 performs UWB communication with the devices 30 in or near the vehicle 20.

In the process of step S61, the vehicle management device 26 performs UWB communication with the devices 30 in or near the vehicle 20 to check whether a requesting device is located inside or outside the vehicle 20. The requesting device is the device 30 that performed communication that triggered a locking request.

In a case in which a locking request is made by transmitting a signal for requesting locking, the requesting device is the device 30 that has transmitted the signal. The vehicle management device 26 verifies whether the device 30 that has transmitted the signal for requesting locking is located inside or outside the vehicle 20 by performing UWB communication with the device 30.

In a case in which a locking request is made by performing an operation on the vehicle 20 to request locking, the requesting device is the device 30 that has performed UWB communication with the vehicle 20 within one of the exterior UWB effective ranges 91 after the operation. In a case in which a locking request is made by performing an operation for requesting locking, the vehicle management device 26 does not need to verify the position of the requesting device since it has been already verified that the requesting device is located outside the vehicle 20.

In the process of step S61, the vehicle management device 26 checks the information of the requesting device. Specifically, the vehicle management device 26 identifies the requesting device based on the authentication information AT. The vehicle management device 26 checks the identification information of the device 30, the information indicating the owner of the device 30, and the like as the information of the requesting device. The information of the requesting device checked by the vehicle management device 26 is not limited to the information described above.

In the process of step S61, the vehicle management device 26 performs UWB communication with the devices 30 in or near the vehicle 20 to verify whether a device 30 storing information related to a digital key is present inside the vehicle 20.

In the process of step S61, when a device 30 storing information related to a digital key is present inside the vehicle 20, the vehicle management device 26 checks the information of that device 30. Specifically, the vehicle management device 26 identifies the device 30 present inside the vehicle 20 based on the authentication information AT. The vehicle management device 26 checks the identification information of the device 30, the information indicating the owner of the device 30, and the like as the information of the device 30 present inside the vehicle 20. The information of the device 30 present inside the vehicle 20 checked by the vehicle management device 26 is not limited to the information described above.

In the process of step S62, the vehicle management device 26 determines whether a device 30 storing information related to a digital key is present inside the vehicle 20. When performing UWB communication with a device 30 storing information related to a digital key within the interior UWB effective range 92 in the process of step S61, the vehicle management device 26 determines that a device 30 storing the information related to the digital key is present inside the vehicle 20 in the process of step S62. When not performing UWB communication with a device 30 storing the information related to the digital key within the interior UWB effective range 92 in the process of step S61, the vehicle management device 26 determines that no device 30 storing the information related to the digital key is present inside the vehicle 20 in the process of step S62.

When determining in the process of step S62 that no device 30 storing information related to a digital key is present inside the vehicle 20 (step S62: NO), the vehicle management device 26 advances the process to step S67. In the process of step S67, the vehicle management device 26 controls the locking mechanism 29 to lock the vehicle 20. In this manner, the vehicle management device 26 locks the vehicle 20 when no device 30 storing information related to a digital key is present inside the vehicle 20. After locking the vehicle 20, the vehicle management device 26 terminates the series of processes shown in Fig. 10.

When determining in the process of step S62 that a device 30 storing information related to digital key is present inside the vehicle 20 (step S62: YES), the vehicle management device 26 advances the process to step S63.

In the process of step S63, the vehicle management device 26 determines whether the device 30 that triggered the locking is located outside the vehicle 20. In a case in which the series of processes shown in Fig. 10 is executed due to a locking request, the device 30 that triggered the locking is the requesting device.

In a case in which a locking request is made by transmission of a signal for requesting locking, the vehicle management device 26 determines that the device 30 that triggered the locking is located outside the vehicle 20 in the process of step S63 if the communication with the device 30 that transmitted the signal was not performed within the interior UWB effective range 92 in the process of step S61. In the process of step S61, when communicating with the device 30 that has transmitted the signal within the interior UWB effective range 92, the vehicle management device 26 determines that the device 30 that triggered the locking is not located outside the vehicle 20.

As previously described, when a locking request is made by an operation requesting locking, the premise is that the requesting device is located outside the vehicle 20. Accordingly, the vehicle management device 26 determines that the device 30 that triggered the locking is located outside the vehicle 20.

In the process of step S63, when determining that the device 30 that triggered locking is not located outside the vehicle 20 (step S63: NO), the vehicle management device 26 terminates the series of processes shown in Fig. 10. Specifically, the vehicle management device 26 terminates the series of processes shown in Fig. 10 without locking the vehicle 20 when a device 30 storing information related to a digital key is present inside the vehicle 20 and the device 30 that triggered locking is not located outside the vehicle 20.

In the process of step S63, when determining that the device 30 that triggered locking is located outside the vehicle 20 (step S63: YES), the vehicle management device 26 advances the process to step S64. Specifically, the vehicle management device 26 advances the process to step S64 when a device 30 storing information related to a digital key is present inside the vehicle 20 and the device 30 that triggered locking is located outside the vehicle 20.

In the process of step S64, the vehicle management device 26 determines whether the vehicle 20 can be locked. At this time, the vehicle management device 26 determines, based on prescribed determination critera, whether the positional arrangement of devices 30 in or near the vehicle 20 allows the vehicle 20 to be locked. The specific determination criteria used for this determination will be described later.

In the process of step S64, when determining that the vehicle 20 cannot be locked (step S64: NO), the vehicle management device 26 terminates the series of processes shown in Fig. 10.

In the process of step S64, when determining that the vehicle 20 can be locked (step S64: YES), the vehicle management device 26 advances the process to step S65. In the process of step S65, the vehicle management device 26 controls the locking mechanism 29 to lock the vehicle 20. After locking the vehicle 20, the vehicle management device 26 advances the process to step S66.

In the process of step S66, the vehicle management device 26 disables the function for starting the engine 38. As will be described later, the vehicle management device 26 starts the engine 38 when detecting an operation by the user. When executing the process of step S66, the vehicle management device 26 does not start the engine 38 even if the vehicle management device 26 subsequently detects an operation by the user to request the start of the engine 38. Thereafter, the vehicle management device 26 terminates the series of processes shown in Fig. 10.

### Series of Processes Executed Due to Separation of a Device 30

The following describes a manner in which the vehicle management device 26 executes the series of processes shown in Fig. 10 when the vehicle management device 26 detects that a device 30 storing information related to a digital key is separated from the vehicle 20 by at least the specified distance.

In the process of step S61, the vehicle management device 26 verifies the positional arrangement of devices 30 in or near the vehicle 20. At this time, the vehicle management device 26 performs UWB communication with the devices 30 in or near the vehicle 20.

In the process of step S61, the vehicle management device 26 checks information of the device 30 that is separated from the vehicle 20 by at least the specified distance. Specifically, the vehicle management device 26 identifies the device 30 separated from the vehicle 20 by at least the specified distance based on the authentication information AT. The vehicle management device 26 checks the identification information of the device 30, the information indicating the owner of the device 30, and the like as the information of the device 30 separated from the vehicle 20 by at least the specified distance. The information of the device 30 separated from the vehicle 20 by at least the specified distance, which is checked by the vehicle management device 26, is not limited to the information described above.

In the process of step S61, the vehicle management device 26 performs UWB communication with the devices 30 in or near the vehicle 20 to verify whether a device 30 storing information related to a digital key is present inside the vehicle 20. This process is the same as the case in which the vehicle management device 26 executes the series of processes shown in Fig. 10 in response to a locking request.

In the process of step S61, when a device 30 storing information related to a digital key is present inside the vehicle 20, the vehicle management device 26 checks the information of that device 30. This process is the same as the case in which the vehicle management device 26 executes the series of processes shown in Fig. 10 in response to a locking request.

In the process of step S62, the vehicle management device 26 determines whether a device 30 storing information related to a digital key is present inside the vehicle 20. This process is the same as the case in which the vehicle management device 26 executes the series of processes shown in Fig. 10 in response to a locking request.

When determining in the process of step S62 that no device 30 storing information related to a digital key is present inside the vehicle 20 (step S62: NO), the vehicle management device 26 advances the process to step S67. In the process of step S67, the vehicle management device 26 controls the locking mechanism 29 to lock the vehicle 20. After locking the vehicle 20, the vehicle management device 26 terminates the series of processes shown in Fig. 10.

When determining in the process of step S62 that a device 30 storing information related to digital key is present inside the vehicle 20 (step S62: YES), the vehicle management device 26 advances the process to step S63.

In the process of step S63, the vehicle management device 26 determines whether the device 30 that triggered the locking is located outside the vehicle 20.

In a case in which the series of processes shown in Fig. 10 is executed due to separation of a device 30 from the vehicle 20, the device 30 that triggered locking is the device 30 separated from the vehicle 20. Therefore, in a case in which the series of processes shown in Fig. 10 is executed due to the fact that a device 30 is separated from the vehicle 20, the vehicle management device 26 determines that the device 30 that triggered locking is located outside the vehicle 20 in the process of step S63.

In the process of step S63, when determining that the device 30 that triggered locking is located outside the vehicle 20 (step S63: YES), the vehicle management device 26 advances the process to step S64. In the process of step S64, the vehicle management device 26 determines whether the vehicle 20 can be locked. This process is the same as the case in which the vehicle management device 26 executes the series of processes shown in Fig. 10 in response to a locking request.

In the process of step S64, when determining that the vehicle 20 cannot be locked (step S64: NO), the vehicle management device 26 terminates the series of processes shown in Fig. 10.

In the process of step S64, when determining that the vehicle 20 can be locked (step S64: YES), the vehicle management device 26 advances the process to step S65. In the process of step S65, the vehicle management device 26 controls the locking mechanism 29 to lock the vehicle 20. After locking the vehicle 20, the vehicle management device 26 advances the process to step S66.

In the process of step S66, the vehicle management device 26 disables the function for starting the engine 38. This process is the same as the case in which the vehicle management device 26 executes the series of processes shown in Fig. 10 in response to a locking request. Thereafter, the vehicle management device 26 terminates the series of processes shown in Fig. 10.

When unlocking of the vehicle 20 is requested after the vehicle 20 is locked, the vehicle management device 26 controls the locking mechanism 29 to unlock the vehicle 20. If the process of step S66 has been executed, the vehicle management device 26 cancels the disabling of the function for starting the engine 38 upon unlocking the vehicle 20. This process is executed regardless of whether the vehicle management device 26 has executed the series of processes shown in Fig. 10 in response to a locking request or in response to separation of a device 30 storing information related to a digital key from the vehicle 20.

### Determination Criterion in Step S64

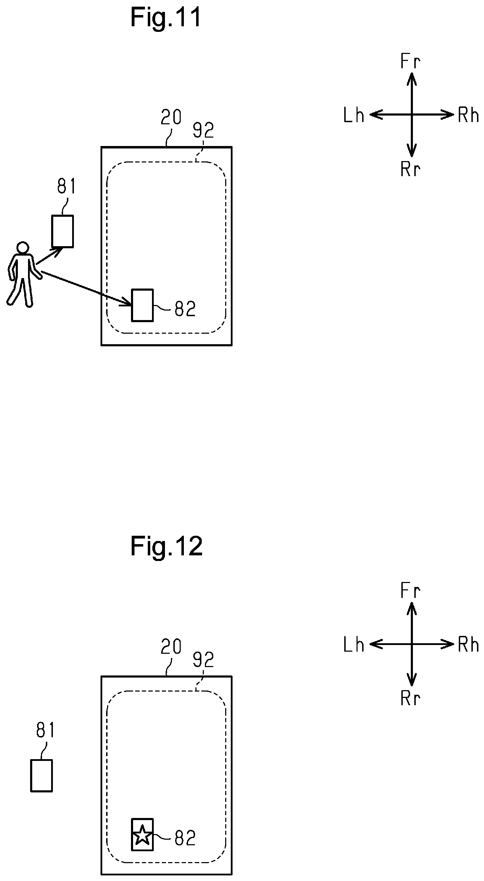

In the process of step S64, the vehicle management device 26 determines, based on a prescribed determination criterion, whether the positional arrangement of devices 30 in or near the vehicle 20 allows the vehicle 20 to be locked. Figs. 11 to 13 show examples of the positional arrangement of devices 30 in or near the vehicle 20 as identified by the vehicle management device 26 in the process of step S61. The determination criterion applied by the vehicle management device 26 in step S64 will be described below with reference to the examples shown in Figs. 11 to 13.

In the examples of Figs. 11 to 13, the external device 81 is a device 30 that stores information related to a digital key that has triggered locking. In a case in which the series of processes shown in Fig. 10 has been executed due to a locking request, the external device 81 is the device 30 that has performed the communication that triggered the locking request. In a case in which the series of processes shown in Fig. 10 has been executed due to separation of a device 30 from the vehicle 20, the external device 81 is the device 30 that has separated from the vehicle 20.

In each of the examples of Figs. 11 to 13, the internal device 82 is a device 30 that has performed UWB communication with the vehicle management device 26 within the interior UWB effective range 92 in the process of step S61.

Fig. 11 shows the vehicle 20, the external device 81, and the internal device 82 in a first example. In the first example, the external device 81 and the internal device 82 belong to the same user. In the process of step S64, the vehicle management device 26 verifies the owner of the external device 81 and the owner of the internal device 82 based on identification results of the devices 30 in the process of step S61.

When the owner of the external device 81 and the owner of the internal device 82 are the same, the vehicle management device 26 determines in the process of step S64 that the positional arrangement of the devices 30 in or near the vehicle 20 allows the vehicle 20 to be locked. In contrast, when the owner of the external device 81 and the owner of the internal device 82 are not the same, the vehicle management device 26 determines in the process of step S64 that the positional arrangement of the devices 30 in or near the vehicle 20 does not allow the vehicle 20 to be locked.

Fig. 12 shows the vehicle 20, the external device 81, and the internal device 82 in a second example. In the second example, the internal device 82 is the specific device 30 that has been designated in advance. In the second example, the device 30 that the user does not desire to leave inside the vehicle 20 is designated in advance as the specific device 30. The specific device 30 is designated from among multiple devices 30 that store information related to digital keys. In the process of step S64, the vehicle management device 26 verifies whether the internal device 82 is the specific device 30.

The device information DD is information indicating the specific device 30 designated in advance, and is stored in the vehicle management device 26. The vehicle management device 26 verifies whether the internal device 82 is the specific device 30 by referring to the device information DD.

Specifically, the vehicle management device 26 compares the identification information of the internal device 82 verified in the process of step S61 with the identification information of the specific device 30 included in the device information DD. When the identification information of the internal device 82 is the same as the identification information of the specific device 30 included in the device information DD, the vehicle management device 26 determines that the internal device 82 is the specific device.

When the internal device 82 is not the specific device 30, the vehicle management device 26 determines that the positional arrangement of the devices 30 in or near the vehicle 20 allows the vehicle 20 to be locked. In contrast, when the internal device 82 is the specific device 30, the vehicle management device 26 determines that the positional arrangement of the devices 30 in or near the vehicle 20 does not allow the vehicle 20 to be locked.

Multiple internal devices 82 may be present in the vehicle 20. In this case, when at least one of the multiple internal devices 82 is the specific device 30, the vehicle management device 26 does not lock the vehicle 20.

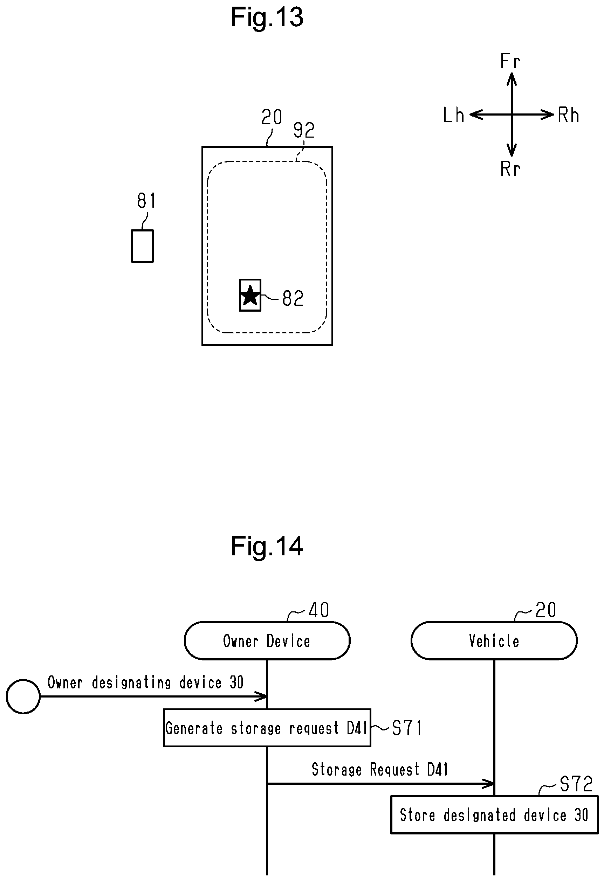

Fig. 13 illustrates the vehicle 20, the external device 81, and the internal device 82 in the third example. In the third example, the internal device 82 is the specific device 30. In the second example, the device 30 that is permitted by the user to be locked inside the vehicle 20 is designated in advance as the specific device 30. The specific device 30 is designated from among multiple devices 30 that store information related to digital keys. In the process of step S64, the vehicle management device 26 verifies whether the internal device 82 is the specific device 30.

The vehicle management device 26 verifies whether the internal device 82 is the specific device 30 by referring to the device information DD.

Specifically, the vehicle management device 26 compares the identification information of the internal device 82 verified in the process of step S61 with the identification information of the specific device 30 included in the device information DD. When the identification information of the internal device 82 is the same as the identification information of the specific device 30 included in the device information DD, the vehicle management device 26 determines that the internal device 82 is the specific device.

When the internal device 82 is the specific device 30, the vehicle management device 26 determines that the positional arrangement of the devices 30 in or near the vehicle 20 allows the vehicle 20 to be locked. In contrast, when the internal device 82 is not the specific device 30, the vehicle management device 26 determines that the positional arrangement of the devices 30 in or near the vehicle 20 does not allow the vehicle 20 to be locked.

Multiple internal devices 82 may be present in the vehicle 20. In this case, when at least one of the multiple internal devices 82 is not the specific device 30, the vehicle management device 26 does not lock the vehicle 20.

The determination criteria described with reference to Figs. 11 to 13 are examples of determination criteria that can be employed by the vehicle management device 26. The vehicle management device 26 employs, for example, one of the determination criteria described with reference to Figs. 11 to 13 as the determination criterion. The vehicle management device 26 can also simultaneously employ two or more determination criteria among the determination criteria described with reference to Figs. 11 to 13, provided that the employed determination criteria do not conflict with each other.

For example, the vehicle management device 26 can simultaneously employ the determination criterion described with reference to Fig. 11 and the determination criterion described with reference to Fig. 12. In this case, for example, even when the owner of the external device 81 and the owner of the internal device 82 are the same, the vehicle management device 26 does not lock the vehicle 20 if the internal device 82 is the specific device 30. For example, even when the internal device 82 is not the specific device 30, the vehicle management device 26 does not lock the vehicle 20 if the owner of the external device 81 is different from the owner of the internal device 82.

For example, the vehicle management device 26 can simultaneously employ the determination criterion described with reference to Fig. 11 and the determination criterion described with reference to Fig. 13. In this case, for example, even when the owner of the external device 81 and the owner of the internal device 82 are the same, the vehicle management device 26 does not lock the vehicle 20 if the internal device 82 is not the specific device 30. For example, even when the internal device 82 is the specific device 30, the vehicle management device 26 does not lock the vehicle 20 if the owner of the external device 81 is different from the owner of the internal device 82.

### Manner in Which the Specific Device 30 is Designated

The specific devices 30 shown in Figs. 12 and 13 are designated by the owner of the vehicle 20. Fig. 14 shows a manner in which the owner designates a specific device 30. In the following description, processes executed by the execution device 27 are described as processes executed by the vehicle 20. The processes executed by the execution device 36 will be described as processes executed by the device 30.

As shown in Fig. 14, the owner device 40 accepts designation of a specific device 30 by the owner. For example, the owner device 40 accepts the designation of the specific device 30 by prompting the owner to input information indicating a specific device 30. In this manner, the owner device 40 designates a specific device 30.

The owner device 40 that has accepted the designation of a specific device 30 executes the process of step S71. The owner device 40 generates a storage request D41 in the process of step S71. The storage request D41 is a signal for requesting the vehicle 20 to store information indicating the specific device 30 designated by the owner. The storage request D41 includes information indicating the designated specific device 30.

The owner device 40 that has generated the storage request D41 transmits the generated storage request D41 to the vehicle 20. In Fig. 14, the vehicle 20 and the owner device 40 communicate with each other via BLE communication.

The vehicle 20 that has received the storage request D41 executes the process of step S72. In the process of step S72, the vehicle 20 stores the information indicating the specific device 30 designated by the owner based on the storage request D41. At this time, the vehicle 20 identifies the designated specific device 30 based on the storage request D41, and then adds the identification information of the specific device 30 to the device information DD.

In this manner, the specific device 30 is designated through the owner device 40. The vehicle 20 determines whether the specific device 30 is inside the vehicle 20 based on the information of the specific device 30 transmitted by the owner device 40.

### Manner in Which the Vehicle Management Device 26 Controls the Engine 38

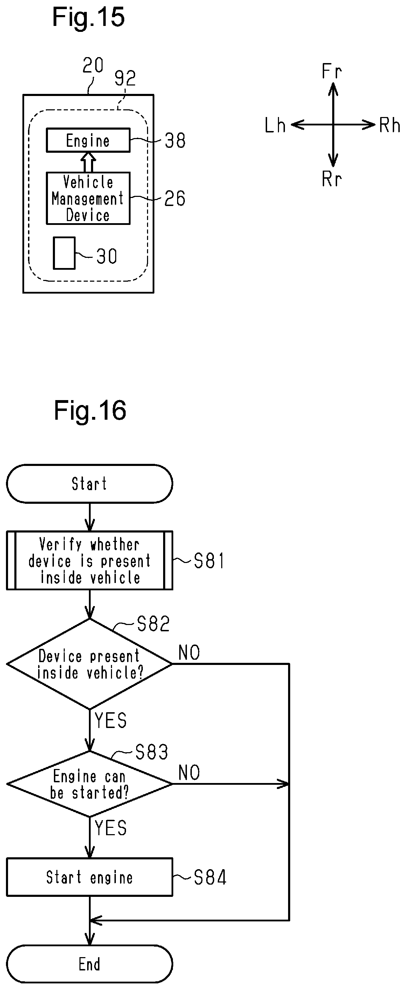

The vehicle management device 26 controls not only the locking mechanism 29 but also the engine 38. Hereinafter, a manner in which the vehicle management device 26 controls the engine 38 will be described with reference to Figs. 15 and 16.

Fig. 15 shows an example of the arrangement of a device 30 when the vehicle management device 26 starts the engine 38. In Fig. 15, a device 30 storing information related to a digital key is within the interior UWB effective range 92.

When an operation for requesting the vehicle 20 to start the engine 38 is performed, the vehicle management device 26 starts the engine 38. The operation for requesting the start of the engine 38 is, for example, an operation of turning on the ignition switch.

When starting the engine 38, the vehicle management device 26 verifies that a device 30 is present inside the vehicle 20 before activating the vehicle 20. At this time, the vehicle management device 26 verifies that a device 30 storing the information related to the digital key having authority to start the engine 38 is present inside the vehicle 20.

When starting the engine 38, the vehicle management device 26 performs UWB communication with devices 30 in or near the vehicle 20. When recognizing that a device 30 storing information related to a digital key is within the interior UWB effective range 92 as a result of UWB communication, the vehicle management device 26 starts the engine 38. When recognizing that a device 30 storing information related to a digital key is not within the interior UWB effective range 92 as a result of UWB communication, the vehicle management device 26 does not start the engine 38.

### Process Executed When the Engine 38 Is Started

Fig. 16 shows a series of processes executed by the vehicle management device 26 when starting the engine 38. The series of processes shown in Fig. 16 is executed by the execution device 27 based on the control program PC.

The series of processes shown in Fig. 16 is executed when an operation for requesting the vehicle 20 to start the engine 38 is performed. For example, the vehicle management device 26 executes the series of processes shown in Fig. 16 when the ignition switch is turned on.

In the process of step S81, the vehicle management device 26 verifies whether a device 30 storing information related to a digital key is present inside the vehicle 20. At this time, the vehicle management device 26 performs UWB communication with the devices 30 in or near the vehicle 20.

In the process of the subsequent step S82, the vehicle management device 26 determines whether a device 30 storing information related to a digital key is present inside the vehicle 20. At this time, the vehicle management device 26 determines whether a device 30 storing the information related to the digital key having authority to start the engine 38 is present inside the vehicle 20.

In the process of step S81, when a device 30 that has performed UWB communication is within the interior UWB effective range 92 and that device 30 has authority to start the engine 38, the vehicle management device 26 determines that a device 30 storing the information related to the digital key having authority to start the engine 38 is present inside the vehicle 20.

In the process of step S81, when a device 30 that has performed UWB communication is not within the interior UWB effective range 92, the vehicle management device 26 determines that a device 30 that stores the information related to the digital key having authority to start the engine 38 is not present inside the vehicle 20. In the process of step S81, when a device 30 that has performed UWB communication is within the interior UWB effective range 92 and that device 30 does not have authority to start the engine 38, the vehicle management device 26 determines that a device 30 storing the information related to the digital key having authority to start the engine 38 is not present inside the vehicle 20.

When determining in the process of step S82 that a device 30 storing the information related to the digital key having authority to start the engine 38 is not present inside the vehicle 20 (step S82: NO), the vehicle management device 26 terminates the series of processes shown in Fig. 16.

When determining in the process of step S82 that a device 30 storing the information related to the digital key having authority to start the engine 38 is present inside the vehicle 20 (step S82: YES), the vehicle management device 26 advances the process to step S83. In the process of step S83, the vehicle management device 26 determines whether the engine 38 can be started.

When the function for starting the engine 38 has been disabled in the process of step S66 in Fig. 10, the vehicle management device 26 determines that the engine 38 cannot be started. When the function for starting the engine 38 has not been disabled, the vehicle management device 26 determines that the engine 38 can be started.

When determining in the process of step S83 that the engine 38 cannot be started (step S83: NO), the vehicle management device 26 terminates the series of processes shown in Fig. 16.

In the process of step S83, when determining that the engine 38 can be started (step S83: YES), the vehicle management device 26 advances the process to step S84. In the process of step S84, the vehicle management device 26 starts the engine 38. After starting the engine 38, the vehicle management device 26 terminates the series of processes shown in Fig. 16.

As described above, when requested to start the engine 38, the vehicle management device 26 starts the engine 38 on condition that a device 30 storing the information related to the digital key having authority to start the engine 38 is present inside the vehicle 20. However, the vehicle management device 26 does not start the engine 38 when the function for starting the engine 38 has been disabled even if a device 30 storing the information related to the digital key having authority to start the engine 38 is present inside the vehicle 20.

### Operation of the Present Embodiment

The vehicle management device 26 may detect a locking request via communication with a device 30 outside the vehicle 20. In this case, when determining that locking is possible, the vehicle management device 26 locks the vehicle 20 even if another device 30 is present inside the vehicle 20.

### Advantages of the Present Embodiment

(1) The user of the vehicle 20 can lock the vehicle 20 even when a device 30 storing information related to a digital key is present inside the vehicle 20.
(2) The vehicle 20 performs distance measurement via Ultra Wideband (UWB) communication with devices 30. When detecting a locking request from a requesting device in a state in which another device 30 storing information related to a digital key of the vehicle 20 is present inside the vehicle 20, the vehicle management device 26 verifies that the requesting device is located outside the vehicle 20 through distance measurement.
   When a request to lock the vehicle 20 is made with a device 30 present inside the vehicle 20, the vehicle 20 performs distance measurement with respect to the requesting device via UWB communication. This allows the vehicle 20 to determine whether the requesting device is located outside the vehicle 20, and to evaluate whether locking is permissible based on that determination.
(3) The vehicle 20 performs distance measurement via Ultra Wideband (UWB) communication with devices 30. Through distance measurement, the vehicle management device 26 may verify that a device 30 is separated from the vehicle 20 by at least the specified distance with another device 30 present in the vehicle 20. In this case, the vehicle management device 26 checks the information of the device 30 inside the vehicle 20 and determines whether to lock the vehicle 20 based on the checked information.
   The vehicle management device 26 detects that a device 30 storing information related to a digital key is separated from the vehicle 20 through distance measurement. When detecting that the device 30 is separated from the vehicle 20, the vehicle management device 26 determines whether to lock the vehicle 20, even if another device 30 is present inside the vehicle 20. The vehicle 20 may be locked not only in response to communication that triggers a locking request, but also in response to distance measurement via UWB with a device 30 storing information related to a digital key. This configuration prevents unintentional failure to lock the vehicle 20 with a device 30 storing information related to a digital key left inside the vehicle 20.
(4) When the vehicle 20 is requested to start the engine 38, the vehicle 20 starts the engine 38 on condition that a device 30 storing information related to a digital key of the vehicle 20 is present inside the vehicle 20. If the vehicle management device 26 locks the vehicle 20 while another device 30 storing information related to a digital key is present inside the vehicle 20 and then a request to start the engine 38 is made before the vehicle 20 is unlocked, the vehicle 20 does not start the engine 38, even if a device 30 storing information related to a digital key is present inside the vehicle 20.
   When the vehicle 20 is locked with another device 30 storing information related to a digital key is present inside the vehicle 20, the vehicle 20 does not permit the start of the engine 38 while the vehicle 20 is locked. Accordingly, the vehicle 20 prevents unintended start of the engine 38 in the absence of the user who performed the locking.
(5) The vehicle management device 26 verifies the owner of a device 30 present inside the vehicle 20 and the owner of the requesting device, and determines to not lock the vehicle 20 when a device 30 that belongs to a user different from the owner of the requesting device and stores information related to a digital key of the vehicle 20 is present inside the vehicle 20.
   When boarding the vehicle 20, a user may possess multiple devices 30, and there may be a need to lock the vehicle 20 with one or more of those devices left inside the vehicle 20. The vehicle management device 26 verifies the owners of the device 30 located inside the vehicle 20 and the device 30 located outside the vehicle 20. When the owners are the same, the vehicle management device 26 locks the vehicle 20. This configuration prevents a device 30 belonging to someone else from being inadvertently left inside the vehicle 20 when a locking request is issued from a device 30 located outside the vehicle 20.
(6) The specific device 30 is designated in advance from among multiple devices 30 that store information related to digital keys of the vehicle 20. When detecting a locking request, the vehicle management device 26 determines to not lock the vehicle 20 if the specific device 30 is located inside the vehicle 20.
   Depending on the combination of the devices 30 located inside and outside the vehicle 20, it may not be desirable for the user to lock the vehicle 20 with a device 30 left inside the vehicle 20. When locking of the vehicle 20 is requested, the requesting device may be located outside the vehicle 20. Even in this case, the vehicle management device 26 does not lock the vehicle 20 if the specific device 30 designated in advance is present inside the vehicle 20. This configuration enables the user to preselect a device 30 that should not be locked inside the vehicle 20.
(7) The specific device 30 is designated in advance from among multiple devices 30 that store information related to digital keys of the vehicle 20. When detecting a locking request, the vehicle management device 26 determines to not lock the vehicle 20 if a device 30 different from the specific device 30, among multiple devices 30, is inside the vehicle 20.
   Depending on the combination of the devices 30 located inside and outside the vehicle 20, it may not be desirable for the user to lock the vehicle 20 with a device 30 left inside the vehicle 20. When locking of the vehicle 20 is requested, the requesting device may be located outside the vehicle 20. Even in this case, the vehicle management device 26 does not lock the vehicle 20 if a device 30 other than the specific device 30 designated in advance is present inside the vehicle 20. This configuration enables the user to prevent any device 30 other than the specific device 30 designated in advance from being locked inside the vehicle 20.
(8) The specific device 30 is designated through a device 30. The vehicle 20 receives information indicating the specific device 30 transmitted from a device 30. The vehicle management device 26 determines whether the specific device 30 is located inside the vehicle 20 based on the received information indicating the specific device 30.
   The vehicle 20 receives information indicating the designated specific device 30 from a device 30 included in the digital key system 10. Based on the received information, the vehicle 20 is capable of determining whether locking is permissible.
(9) According to the control method, when a locking request via communication with a device 30 outside the vehicle 20 is detected, the vehicle 20 is locked when it is determined that locking is possible even if another device 30 is present inside the vehicle 20. This allows the user to lock the vehicle 20 even when a device 30 storing information related to a digital key is present inside the vehicle 20.
(10) A locking request may be detected via communication with a device 30 outside the vehicle 20. In this case, when determining that locking is possible, the control program PC locks the vehicle 20 even if another device 30 is present inside the vehicle 20. This allows the user to lock the vehicle 20 even when a device 30 storing information related to a digital key is present inside the vehicle 20.
(11) A locking request may be detected via communication with a device 30 outside the vehicle 20. In this case, when determining that locking is possible, the digital key system 10 locks the vehicle 20 even if another device 30 is present inside the vehicle 20. This allows the user to lock the vehicle 20 even when a device 30 storing information related to a digital key is present inside the vehicle 20.
(12) The specific device 30 is designated in advance from among multiple devices 30 that store information related to digital keys of the vehicle 20. When detecting a locking request, the digital key system 10 determines to not lock the vehicle 20 if the specific device 30 is located inside the vehicle 20.
   Depending on the combination of the devices 30 located inside and outside the vehicle 20, it may not be desirable for the user to lock the vehicle 20 with a device 30 left inside the vehicle 20. When detecting a locking request for the vehicle 20 from a requesting device outside the vehicle 20, the digital key system 10 does not lock the vehicle 20 if the specific device 30 designated in advance is present inside the vehicle 20. This configuration enables the user to preselect a device 30 that should not be locked inside the vehicle 20.
(13) The specific device 30 is designated in advance from among multiple devices 30 that store information related to digital keys of the vehicle 20. When detecting a locking request, the digital key system 10 determines to not lock the vehicle 20 if a device 30 different from the specific device 30, among multiple devices 30, is inside the vehicle 20.
   Depending on the combination of the devices 30 located inside and outside the vehicle 20, it may not be desirable for the user to lock the vehicle 20 with a device 30 left inside the vehicle 20. When locking of the vehicle 20 is requested, the requesting device may be located outside the vehicle 20. Even in this case, the digital key system 10 does not lock the vehicle 20 if a device 30 other than the specific device 30 designated in advance is present inside the vehicle 20. This configuration enables the user to prevent any device 30 other than the specific device 30 designated in advance from being locked inside the vehicle 20.
(14) In the digital key system 10, the specific device 30 is designated through a device 30. This allows the user to designate the specific device 30.

### Modifications

The above-described embodiment may be modified as follows. The above-described embodiment and the following modifications can be combined if the combined modifications remain technically consistent with each other.

### Digital Key System 10

The vehicle 20 may lack at least one of the BLE module 23, the UWB module 24, and the NFC module 25. The vehicle 20 is capable of performing short-range communication with the device 30 as long as the vehicle 20 includes at least one module. The vehicle 20 may include modules other than those listed above, provided that the module is capable of performing short-range communication with the device 30.

The digital key-related aspects in the above-described embodiment need not conform to the CCC standard.

In the vehicle 20 described above, the vehicle management device 26 is locking means or a locking device. The configuration of the locking means or the locking device provided in the vehicle 20 is not limited to the above-described embodiment. For example, the locking means or the locking device may be a device that controls only the locking mechanism 29. For example, the locking means or the locking device may be a unit including the locking mechanism 29 and a device that controls the locking mechanism 29.

The vehicle management device 26 is not limited to the digital key ECU. The vehicle management device 26 may be, for example, a central ECU that integrally manages multiple ECUs included in the vehicle 20.

In the above-described embodiment, the vehicle management device 26 is provided with the execution device 27, which is processing circuitry including one or more processors that run computer programs (software) to execute various processes. However, the vehicle management device 26 may be provided with processing circuitry including one or more dedicated hardware circuits, such as application-specific integrated circuits (ASICs) that execute at least some of the processes. Alternatively, the vehicle management device 26 may be provided with processing circuitry including a combination of one or more processors and one or more dedicated hardware circuits. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer. The same applies to the devices 30 and the management server 70.

The vehicle management device 26 does not necessarily need to store the vehicle program PV. In this case, the vehicle management device 26 does not store or delete the authentication information AT. The vehicle management device 26 may be modified as long as it is capable of authenticating a device 30 and determining whether locking of the vehicle 20 is permissible when receiving a locking request from the device 30.

The devices 30 are not limited to smartphones. The devices 30 may be smartwatches. The devices 30 may be prescribed servers. In this case, the devices 30 may be included in a prescribed server. For example, when a vehicle rental service provider or a vehicle sharing service provider is the owner of the vehicle 20, the owner device 40 may be included in a prescribed server. For example, the friend device 51 may be included in the prescribed server.

The shareable device 50 has a function of receiving the shareable key KS as in the above-described embodiment. A device 30 that is capable of receiving a digital key, such as a shareable device 50, may be referred to as a receiver device.

In the above-described embodiment, the digital keys are arranged in a hierarchy consisting of, in descending order, the owner key KO, the friend key KF, and the guest key KN, such that digital keys at higher hierarchical levels are assigned greater authority. However, the digital keys do not necessarily need to be configured such that higher hierarchical levels correspond to greater authority. For example, equal authority may be assigned to the three hierarchical levels: the owner key KO, the friend key KF, and the guest key KN.

A separate device server 60 does not necessarily need to be provided for each type of device 30. It is sufficient that the multiple devices 30 and the management server 70 wirelessly communicate with each other. The device server 60 may be omitted. It is sufficient that the multiple devices 30 and the management server 70 communicate directly via wireless communication.

The management server 70 may include multiple servers. For example, the management server 70 may include a server that stores the database DB and a server that executes a server program PS. In addition, for example, the management server 70 may include a server that communicates with the vehicles 20 and a server that communicates with the device server 60, and these servers may communicate with each other.

The management server 70 does not necessarily need to store the database DB. It is sufficient that the management server 70 manage at least a combination of the key information DK of the device 30 and the authentication information AT of the vehicle management device 26 for one digital key in the digital key system 10.

### Various Types of Information

The authentication information AT is not limited to the example of the above-described embodiment as long as it is information for authenticating digital keys when digital keys are used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. Further, for example, the key information DK may include information indicating the type of the digital key. The type of the digital key is, for example, information indicating one of the owner key KO, the friend key KF, and the guest key KN.

The database DB may include information indicating the type of the devices 30. The type of the devices 30 is, for example, information indicating any one of a smartphone, a smartwatch, a prescribed server, and the like.

The structure of the data DA in the database DB is not limited to the example of the above-described embodiment. The database DB may be modified as long as it includes information necessary for the management server 70 to perform management in the digital key system 10.

In the database DB, the authority does not necessarily need to be uniformly determined in accordance with the type of the digital key, and may be set for each digital key. In the database DB, the authority does not necessarily need to be defined.

The types of digital keys do not necessarily need to include the guest keys KN. In other words, in the digital key system 10, the shareable key KS may be only the friend key KF.

### Series of Processes for Registering Digital Keys

The series of processes for registering the owner key KO is not limited to the example in the above-described embodiment. For example, even if pairing through the process of step S12 is not performed, the owner device 40 may store the owner key information DKO by transmitting and receiving information such as the generation data DC between the vehicle 20 and the first device 30A via the management server 70. The series of processes for registering the owner key KO may be appropriately modified to align with the structure of the information included in the owner key information DKO and the structure of the information included in the authentication information AT.

The series of processes for registering the friend keys KF is not limited to the example in the above-described embodiment. For example, the management server 70 may update the database DB through the process of step S29 after transmitting the authentication package ATP and the storage request D24 to the vehicle 20. The series of processes for registering the friend key KF may be appropriately modified to align with the structure of the information included in the friend key information DKF and the structure of the information included in the authentication information AT.

The series of processes for registering the guest keys KN is not limited to the example in the above-described embodiment. The order of processes may differ from the series of processes for registering the friend key KF in the above-described embodiment. The series of processes for registering the guest key KN may be appropriately modified to align with the structure of the information included in the guest key information DKN and the structure of the information included in the authentication information AT.

The types of digital keys do not necessarily need to include the guest keys KN. In other words, in the digital key system 10, the shareable key KS may be only the friend key KF.

The guest device 52 may be able to transmit a request to register a new guest key KN. In other words, the shareable device 50 may transmit a request to register a new guest key KN regardless of whether the shareable device 50 is the friend device 51 or the guest device 52.

### Manner in Which the Vehicle 20 Is Locked

The above-described device 30 transmits a signal for requesting locking via BLE communication using the BLE module 33. The manner in which the device 30 transmits a signal for requesting locking is not limited to the above-described embodiment. For example, the device 30 may transmit a signal for requesting locking through communication via a wireless communication network using the wireless communication device 31. For example, the device 30 may transmit a signal for requesting locking via UWB communication using the UWB module 34. For example, the device 30 may transmit a signal for requesting locking via NFC communication using the NFC module 35.

In the above-described embodiment, two methods are available for the user of a device 30 to issue a locking request through communication between the device 30 and the vehicle 20: a method in which a signal for requesting locking is transmitted via the device 30, and a method in which an operation requesting locking is performed with respect to the vehicle 20. Either of these methods alone may be employed.

In the above-described embodiment, the vehicle management device 26 locks the vehicle 20 when a device 30 is separated from the vehicle 20 by at least the specified distance. The vehicle 20 may be configured such that the vehicle 20 is not locked even when a device 30 is separated from the vehicle 20 by at least the specified distance.

In the above-described embodiment, the vehicle 20 performs distance measurement via UWB communication with devices 30. The method by which the vehicle 20 performs distance measurement is not limited to the above-described embodiment. For example, the vehicle 20 may perform distance measurement via BLE communication with the device 30.

In the process of step S61 in Fig. 10, the vehicle management device 26 identifies devices 30 based on the authentication information AT. The method by which the vehicle management device 26 identifies devices 30 is not limited to the above-described embodiment. For example, the vehicle management device 26 may receive information for identifying a device 30 when communicating with the device 30, and identify the device 30 by checking the received information.

The above-described vehicle management device 26 does not lock the vehicle 20 when the owners of the external device 81 and the internal device 82 are different. The vehicle management device 26 may lock the vehicle 20 in a state in which the owners of the external device 81 and the internal device 82 are different. In this case, the vehicle management device 26 does not necessarily need to verify the owners of the devices 30.

When determining that a device 30 is present inside the vehicle 20 in the process of step S62 of Fig. 10 (step S62: YES), the vehicle management device 26 executes the process of step S63. The order in which the vehicle management device 26 executes the process of step S62 and the process of step S63 may be reversed. In this case, the vehicle management device 26 executes the process of step S62 when determining in the process of step S63 that the device 30 that triggered locking is located outside the vehicle 20 (step S63: YES). When determining that a device 30 is present inside the vehicle 20 in the process of step S62 (step S62: YES), the vehicle management device 26 executes the process of step S64.

The vehicle management device 26 locks the vehicle 20 when the owners of the external device 81 and the internal device 82 are the same. The vehicle management device 26 may be configured to not lock the vehicle 20 when the user of the external device 81 and the user of the internal device 82 are the same.

After executing the process of step S65 in Fig. 10, the vehicle management device 26 executes the process of step S66. The order in which the vehicle management device 26 executes the process of step S65 and the process of step S66 may be reversed.

The vehicle 20 is configured to be capable of designating the specific device 30 in advance in the second example. The vehicle 20 does not necessarily need to be configured to be capable of designating the specific device 30 in advance in the second example.

The vehicle 20 is configured to be capable of designating the specific device 30 in advance in the third example. The vehicle 20 does not necessarily need to be configured to be capable of designating the specific device 30 in advance in the third example.

As shown in Fig. 14, in the digital key system 10, the owner designates the specific device 30. Instead of the owner, the user of a shareable device 50 may designate the specific device 30. In this case, for example, the user of the shareable device 50 designates the specific device 30 through the shareable device 50. Then, the shareable device 50 transmits the storage request D41 to the vehicle 20. As described above, the designation device that designates the specific device 30 may be the owner device 40 or a shareable device 50.

In Fig. 14, the owner device 40 and the vehicle 20 perform BLE communication. The method by which the owner device 40 and the vehicle 20 communicate with each other is not limited to the above-described embodiment. For example, the owner device 40 may communicate with the vehicle 20 through communication via a wireless communication network using the wireless communication device 31. For example, the owner device 40 may communicate with the vehicle 20 via UWB communication using the UWB module 34. For example, the owner device 40 may communicate with the vehicle 20 via NFC communication using the NFC module 35.

In the above-described embodiment, the owner designates the specific device 30 through the owner device 40. The manner in which the owner designates the specific device 30 is not limited to the above-described embodiment. For example, the owner may designate the specific device 30 through the HMI 22 provided in the vehicle 20.

### Control of the Engine 38 by the Vehicle Management Device 26

When starting the engine 38, the vehicle management device 26 starts the engine 38 after verifying that a device 30 is present inside the vehicle 20. The vehicle management device 26 may start the engine 38 without verifying whether a device 30 is present inside the vehicle 20.

In the above-described embodiment, when the vehicle 20 is locked in a state in which a device 30 is present inside the vehicle 20, the vehicle management device 26 does not start the engine 38 even when an operation for requesting the start of the engine 38 is performed. The vehicle management device 26 may start the engine 38 in response to an operation for requesting the start of the engine 38 even when the vehicle 20 is locked with a device 30 present inside the vehicle 20.

In the above-described embodiment, when the vehicle 20 is locked with a device 30 inside the vehicle 20, the vehicle management device 26 determines to not start the engine 38 based on the process of step S66 in Fig. 10. The manner in which the vehicle management device 26 does not start the engine 38 is not limited to the above-described embodiment.

For example, when the vehicle 20 is locked while a device 30 remains inside the vehicle 20, the vehicle management device 26 may restrict the authority of the device 30 inside the vehicle 20 to start the engine 38. In such a configuration, the digital key system 10 is capable of restricting the start of the engine 38 by the vehicle management device 26.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20) configured to communicate with multiple devices (30) storing information related to a digital key, the vehicle (20) comprising locking means,
the locking means being configured to
detect a locking request for the vehicle (20) via communication with a requesting device, the requesting device being one of the multiple devices (30);
upon detecting the locking request, check information of an other device (30) storing the information related to the digital key of the vehicle (20) if the requesting device is located outside the vehicle (20) and the other device (30) is located inside the vehicle (20); and
determine whether to lock the vehicle (20) based on the checked information of the other device (30).

2. The vehicle (20) according to claim 1, wherein the locking means is configured to verify that the requesting device is located outside the vehicle (20) by performing distance measurement via communication with the requesting device using Ultra Wideband (UWB) when the locking means detects the locking request in a state in which the other device (30) is located inside the vehicle (20).

3. The vehicle (20) according to claim 1 or 2, wherein
the locking means being configured to
perform distance measurement via communication with the requesting device using Ultra Wideband (UWB),
check the information of the other device (30) when verifying through the distance measurement that the requesting device is separated from the vehicle (20) by at least a specified distance in a state in which the other device (30) located inside the vehicle (20), and
determine whether to lock the vehicle (20) based on the checked information of the other device (30).

4. The vehicle (20) according to any one of claims 1 to 3, wherein
the locking means being configured to
start an engine (38) on condition that one of the multiple devices (30) is located inside the vehicle (20) when start of the engine (38) is requested, and
not start the engine (38) when start of the engine (38) is requested after the vehicle (20) is locked with the other device (30) located inside the vehicle (20) and before the vehicle (20) is unlocked.

5. The vehicle (20) according to any one of claims 1 to 4, wherein
the locking means being configured to
verify an owner of the other device (30) located inside the vehicle (20) and an owner of the requesting device, and
determine to not lock the vehicle (20) when the owner of the other device (30) located inside the vehicle (20) is different from the owner of the requesting device.

6. The vehicle (20) according to any one of claims 1 to 5, wherein
the other device (30) is a specific device (30) designated in advance from among the multiple devices (30), and
the locking means is configured to, upon detecting the locking request, determine to not lock the vehicle (20) when the specific device (30) is located inside the vehicle (20).

7. The vehicle (20) according to any one of claims 1 to 5, wherein
the other device (30) is a device (30) different from a specific device (30) designated in advance from among the multiple devices (30), and
the locking means is configured to, upon detecting the locking request, determine to not lock the vehicle (20) when the other device (30) is located inside the vehicle (20).

8. The vehicle (20) according to claim 6 or 7, wherein
the multiple devices (30) include a designation device configured to designate the specific device (30), and
the locking means is configured to
receive specific device information transmitted from the designation device, and
determine whether the specific device (30) is located inside the vehicle (20) based on the received specific device information.

9. A control method for controlling locking of a vehicle (20), the vehicle (20) including locking means and being configured to communicate with multiple devices (30) storing information related to a digital key, the method comprising:
causing the locking means to detect a locking request for the vehicle (20) via communication with a requesting device, the requesting device being one of the multiple devices (30);
upon detecting the locking request, causing the locking means to check information of another device (30) storing the information related to the digital key of the vehicle (20) if the requesting device is located outside the vehicle (20) and the other device (30) is located inside the vehicle (20); and
causing the locking means to determine whether to lock the vehicle (20) based on the checked information of the other device (30).

10. A control program (PC) configured to control locking of a vehicle (20), the vehicle (20) including locking means and being configured to communicate with multiple devices (30) storing information related to a digital key,
wherein the control program (PC) is configured to cause the locking means to
detect a locking request for the vehicle (20) via communication with a requesting device, the requesting device being one of the multiple devices (30),
upon detecting the locking request, check information of another device (30) storing the information related to the digital key of the vehicle (20) if the requesting device is located outside the vehicle (20) and the other device (30) is located inside the vehicle (20), and
determine whether to lock the vehicle (20) based on the checked information of the other device (30).

11. A digital key system (10), comprising:
multiple devices (30) that store information related to a digital key; and
the vehicle (20) according to any one of claims 1 to 8.
